# EUROPEAN PATENT APPLICATION

(11) **EP 2 018 996 A2**
(43) Date of publication of application: **28.01.2009**
(21) Application number: 08252491.9
(22) Date of filing: 23.07.2008
(51) Int. Cl.: B60Q 1/26, F21S 8/10, F21V 17/10, F21W 101/02, F21Y 101/02

(54) **Light emitter for vehicle and apparatus for alerting opening/closing of sliding door using the same**

(30) Priority: 24.07.2007 JP 2007191902
(71) Applicant: Sun Automobile Corporation, Satagaya-ku, Tokyo 157-0077 (JP)
(72) Inventor: Suzuki, Jun, Tokyo 157-0077 (JP)
(74) Representative: Hallybone, Huw George

(57) **Abstract**

A light emitter for vehicle which can be easily mounted to a vehicle body, and an apparatus for alerting opening/closing of a sliding door using the same are provided. A light emitter for vehicle 1 has an elongated base member 2. The base member 2 is flexible, and has a recess 3 formed in one surface side thereof along the longitudinal direction of the side. The recess 3 has a bottom surface on which a flexible substrate 4 is disposed with one end thereof being connected with a cable 5 which is inserted into the base member 2 from the tip end of the base member 2. The flexible substrate 4 is provided with a resist or 6, a surge suppressor diode 7, and a plurality of LEDs 8 arranged in line on the flexible substrate 4. The recess 3 is filled with a transparent resin 9. The base member 2 has an adhesive layer 10 formed on the other surface side, with a release paper 11 adhered to the adhesive layer 10.

## Description

### BACKGROUND OF THE INVENTION

### Field of the Invention

The present invention relates to a light emitter for vehicle and an apparatus for alerting opening/closing of a sliding door using the light emitter for vehicle.

### Description of the Related Art

Conventionally, motor vehicles which have a light emitter adhered to a free end of a hinged door or the like thereof have been proposed (see Japanese Patent Application Laid-Open No. 2001-246932, for example). Thus, motor vehicles are provided with light emitters for lighting purpose in driving operation such as a headlight, and also light emitters for exclusively warning or attention attracting purpose to other vehicles.

As described above, motor vehicles are provided with light emitters for exclusively warning or attention attracting purpose to other vehicles. However, users often want to mount a further light emitter depending on the conditions under which they use their vehicles.

To mount a further light emitter, a mount hole or the like should be formed in a vehicle body (including a door), which requires extra work and cost for the customization.

The present invention was made in view of the above conventional problem, and one object of the present invention is to provide a light emitter for vehicle which can be easily mounted to a vehicle body, and an apparatus for alerting opening/closing of a sliding door using the same.

### SUMMARY OF THE INVENTION

In order to solve the problem, a light emitter for vehicle according to claim 1 of the present invention includes a base member having a plurality of light emitting diodes arranged on a surface thereof and an adhesive layer formed on the other surface thereof to be adhered to a surface of a vehicle.

Therefore, the light emitter for vehicle can be easily mounted to a vehicle by adhering the light emitter using the adhesive layer to any part of the vehicle whish has a sliding door for example.

In the light emitter for vehicle according to claim 2 of the present invention, the base member is flexible.

That is, a vehicle body of a motor vehicle is formed of curved surfaces, and the flexible base member can follow any curves of the surfaces to allow the light emitter for vehicle to be attached there.

In the light emitter for vehicle according to claim 3 of the present invention, the light emitting diodes are arranged in line. Therefore, the light emitter for vehicle has an elongated shape as a whole, so that the light emitter can easily conform to the vehicle body and change the shape, and also the light emitter can be provided to a rear surface of a sliding door using the gap provided between the rear surface of the sliding door and the vehicle body for example.

In the light emitter for vehicle according to claim 4 of the present invention, the base member has a recess formed in one surface thereof, and the recess has a bottom surface on which the plurality of light emitting diodes are arranged, and also the recess is filled with a transparent resin.

Therefore, the light from the light emitting diodes can be radiated to the exterior through the transparent resin without any disturbance, and dust/dirt build-up to the light emitting diode can be prevented by the transparent resin.

In the light emitter for vehicle according to claim 5 of the present invention, the transparent resin is filled to a level flush with a surface of one side of the base member.

Therefore, the light emitter for vehicle has a flush surface on one side of the base member without any unevenness, which prevents dust/dirt build-up.

In the light emitter for vehicle according to claim 6 of the present invention, the adhesive layer has a release paper adhered to one surface thereof. Therefore, until use, the adhesive layer is protected by the release paper, and in using the light emitter for vehicle, an easy process of removing the release paper enables the attachment of the light emitter for vehicle.

An apparatus for alerting opening/closing of a sliding door according to claim 7 of the present invention includes: the light emitter for vehicle according to any one of claims 1 to 5 which is provided to at least one of a rear part of a vehicle having a sliding door and a rear surface of sliding door; detecting means for detecting opening/closing of the sliding door; and controlling means for turning on the light emitting diodes of the light emitter for vehicle in response to a detection of the sliding door opening by the detecting means, and for turning off the light emitting diodes of the light emitter for vehicle in response to a detection of the sliding door closing.

A sliding door is opened/closed along a vehicle body, unlike a hinged door which is pivotably opened/closed. Therefore, it is more difficult to visually determine if a sliding door is opened/closed or not as seen from a vehicle behind, as compared to the case of a hinged door. However, in the present invention, when a sliding door is opening, a light emitter for vehicle is turned on. As a result, a warning can be given to vehicles behind the vehicle to warn that a sliding door is opening and a child is getting out of the vehicle for example. Then when the sliding door is closed, the light emitter for vehicle is turned on.

In the apparatus for alerting opening/closing according to claim 8 of the present invention, the controlling means turns on the light emitting diodes of the light emitter for vehicle in response to a detection of the sliding door opening by a predetermined distance by the detecting means, and turns off the light emitting diodes of the light emitter for vehicle in response to a detection of the sliding door closing at a predetermined distance.

That is, the light emitter for vehicle is turned on when a sliding door is opened by a predetermined distance and a child may get out of the vehicle. This allows a warning to be given to vehicles behind the vehicle to inform that a child is getting out of the vehicle for example, and also this prevents any unnecessary light emission from the light emitter for vehicle until the door is closed to the distance between which no child can get out of the vehicle.

In The apparatus for alerting opening/closing of a sliding door according to claim 9 of the present invention, the light emitters for vehicle are provided to a rear part of a vehicle body having a sliding door and to a rear surface of the sliding door.

Therefore, the light emitters for vehicle provided to a rear part of a vehicle body and to a rear surface of a sliding door can give effective warning to vehicles behind.

In the apparatus for alerting opening/closing of a sliding door according to claim 10 of the present invention, the rear part of a vehicle body is a rear pillar.

Therefore, a rear pillar can be effectively used to give an effective warning to vehicles behind.

According to a light emitter for vehicle of the present invention, the light emitter can be adhered to any part of a vehicle having a sliding door, which facilitates a mount of the light emitter to a vehicle.

A sliding door is opened along a vehicle body, unlike a hinged door which is pivotably opened/closed. Therefore, it is more difficult to visually determine if a sliding door is opened/closed or not as seen from the back of a vehicle, as compared to the case of a hinged door. However, according to an apparatus for alerting opening/closing of a sliding door of the present invention, when a sliding door of a vehicle is opening, the light emitter for vehicle is turned on. This allows a warning to be given to vehicles behind the vehicle to warn that a child is getting out of the vehicle for example.

### BRIEF DESCRIPTION OF THE DRAWINGS

FIG. 1 is a plane view showing a light emitter for vehicle according to a first embodiment of the present invention;
FIG. 2 is a cross sectional view taken along the line C-C' of FIG. 1;
FIG. 3 is a cross sectional view taken along the line B-B' of FIG. 2;
FIG. 4 is a cross sectional view taken along the line A-A' of FIG. 1;
FIG. 5 is a perspective view showing an attached light emitter for vehicle;
FIG. 6 is a perspective view showing an attached light emitter for vehicle in a different way from FIG. 5;
FIG. 7 is a block diagram showing a second embodiment of the present invention;
FIG. 8 is a flowchart showing procedure of processes of the second embodiment;
FIG. 9 is a block diagram showing a third embodiment of the present invention; and
FIG. 10 is a flowchart showing procedure of processes of the third embodiment of the present invention.

### DETAILED DESCRIPTION OF THE PREFERRED EMBODIMENTS

Now, several embodiments of the present invention will be explained below with reference to the drawings.

### (First Embodiment)

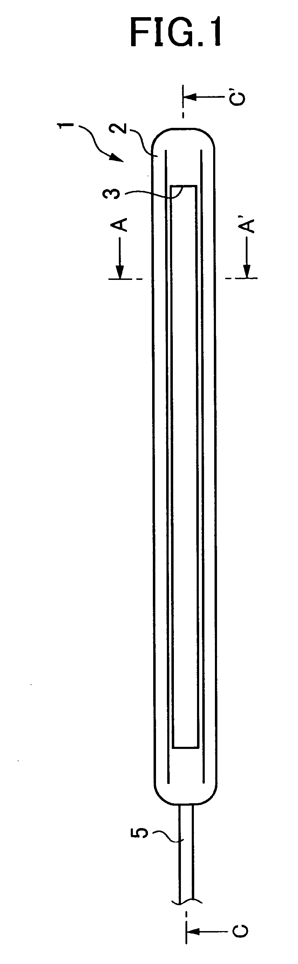

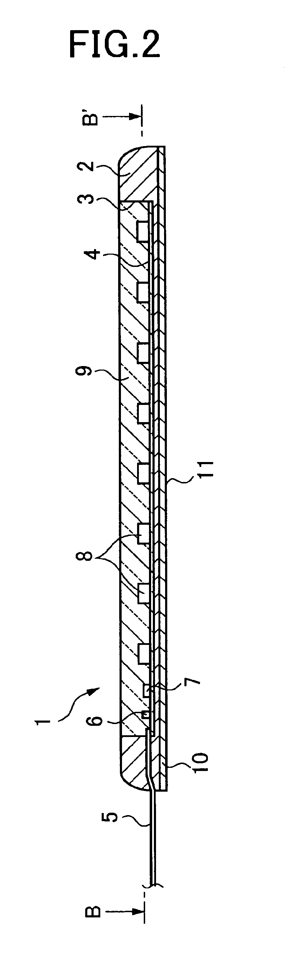

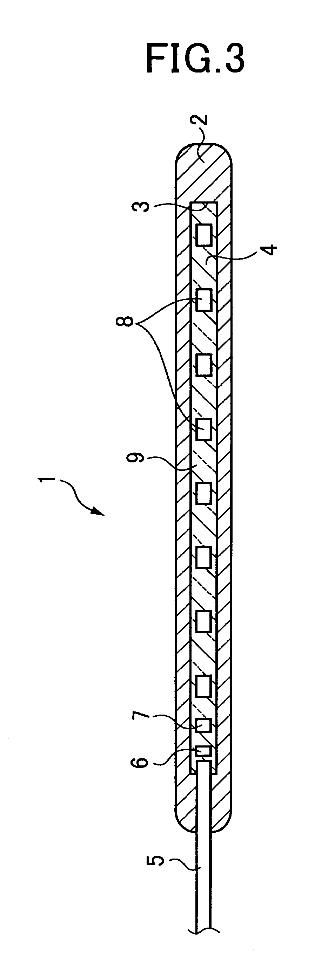

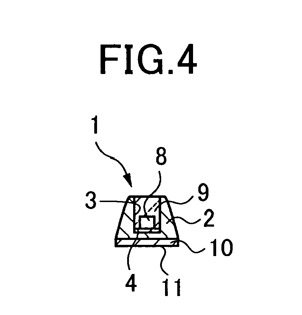

As shown in FIG. 1 to FIG. 4, a light emitter for vehicle 1 includes an elongated base member 2. The base member 2 is formed of EPDM (ethylene propylene rubber) or a general rubber and has a flexibility, and is provided with a recess 3 formed in one surface side thereof along the longitudinal direction of the side.

The recess 3 has a bottom surface on which a flexible substrate 4 is disposed with one end thereof being connected to a cable 5 which is inserted into the base member 2 from the tip end of the base member 2. The flexible substrate 4 is provided with a resistor 6, a surge suppressor diode 7, and a plurality of LEDs 8 (eight LEDs in the present embodiment) arranged in line on the flexible substrate 4.

The recess 3 is filled with a transparent resin 9 such as silicon. The transparent resin 9 is filled to a level flush with a surface on one surface side of the base member 2, so that the recess 3 is closed by the flush surface.

The base member 2 has an adhesive layer 10 formed on the other surface side. The adhesive layer 10 is formed using a double-sided adhesive tape with a release paper 11 adhered to the front surface thereof.

In the present invention, the light emitter for vehicle 1 may have a length of 125 mm, a width of 13 mm, and a thickness of 6 mm for example.

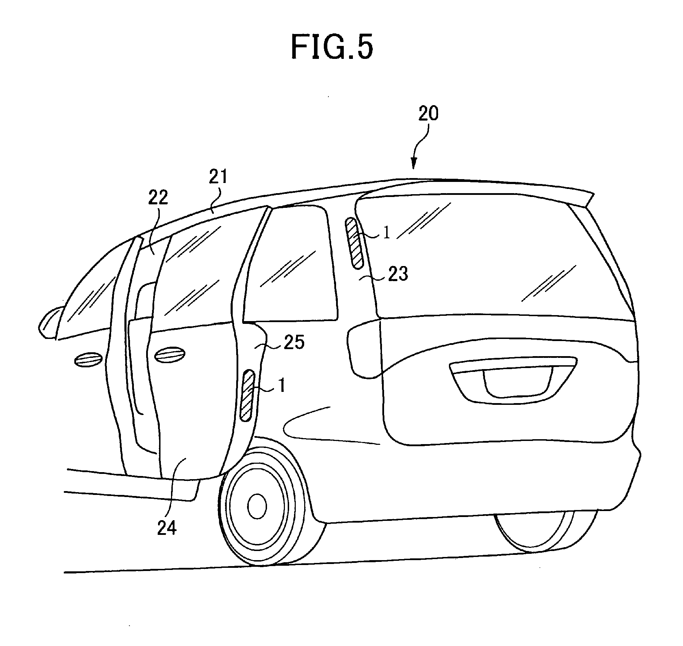

Meanwhile, as shown in FIG. 5, a vehicle 20 to which the light emitter for vehicle 1 is mounted has a vehicle body 21 in which a door opening 22 is formed at the rear part of the vehicle body 21, and a rear pillar 23 is also provided to the rear part of the vehicle body 21. The vehicle 20 also has a sliding door 24 for opening/closing the door opening 22, the sliding door 24 having a rear surface 25.

In the present embodiment having the configuration as described above, until use of the light emitter for vehicle 1, the adhesive layer 10 is protected by the release paper 11, which prevents degradation of a viscosity of the adhesive layer 10 due to dust and dirt build-up onto the adhesive layer 10.

When a user mounts the light emitters to the vehicle 20, the user removes the release paper 11 from each of the light emitter for vehicle 1 having the release paper 11 adhered, and as shown in FIG. 5, adhesively fixes one light emitter for vehicle 1 onto a surface of the rear pillar 23 for example, and adhesively fixes the other light emitter for vehicle 1 onto the rear surface 25 of the sliding door 24. After the fixing, the user wires the cable 5 to be connected to the light emitters for vehicle 1 so that the light emitters for vehicle 1 are turned on and off in synchronization with the opening and closing of the sliding door 24. The control of the turning on/off of the light emitter for vehicle 1 will be explained later.

As described above, the adhesive layer 10 of the light emitter for vehicle 1 facilitates mounting of the light emitter for vehicle 1 to adhere to any part of a vehicle having the sliding door 24. Moreover, the flexible base member 2 enables the light emitter for vehicle 1 to be mounted to any curved surface by conforming to the surface. Furthermore, the elongated light emitter for vehicle 1 can be mounted to the rear surface 25 of the sliding door 24 by using the gap provided between the rear surface 25 of the sliding door 24 and the vehicle body 21.

The LEDs 8 of the light emitter for vehicle 1 mounted to the rear pillar 23 or the rear surface 25 of the sliding door 24 as described above emit a light which is radiated to the exterior through the transparent resin 9 without any disturbance, and the transparent resin 9 also functions to prevent dust/dirt build-up to the LEDs 8.

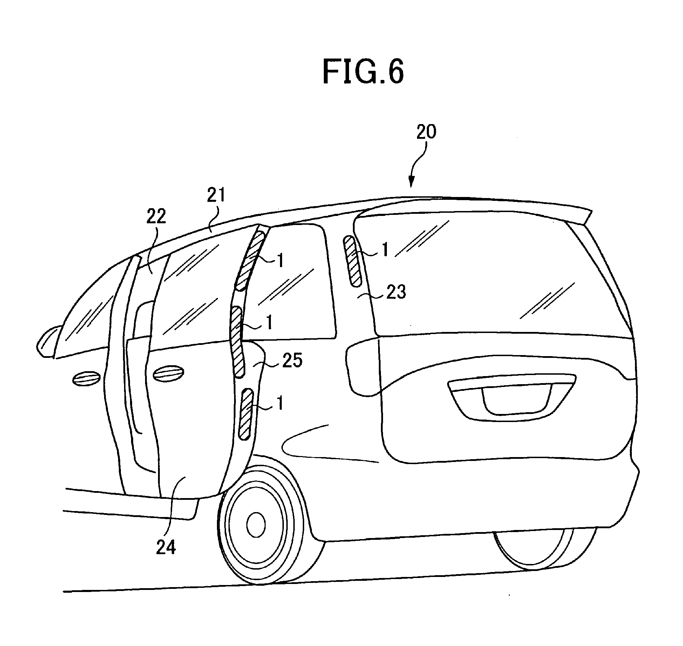

The arrangement of the light emitter for vehicle 1 is not limited to the example shown in FIG. 5, and the light emitter for vehicle 1 may be arranged in any manner: for example a plurality of light emitters for vehicle 1 (three light emitters for vehicle 1 in the present embodiment) may be arranged from the upper portion to the lower portion of the rear surface 25 of the sliding door 24, as shown in FIG. 6.

### (Second Embodiment)

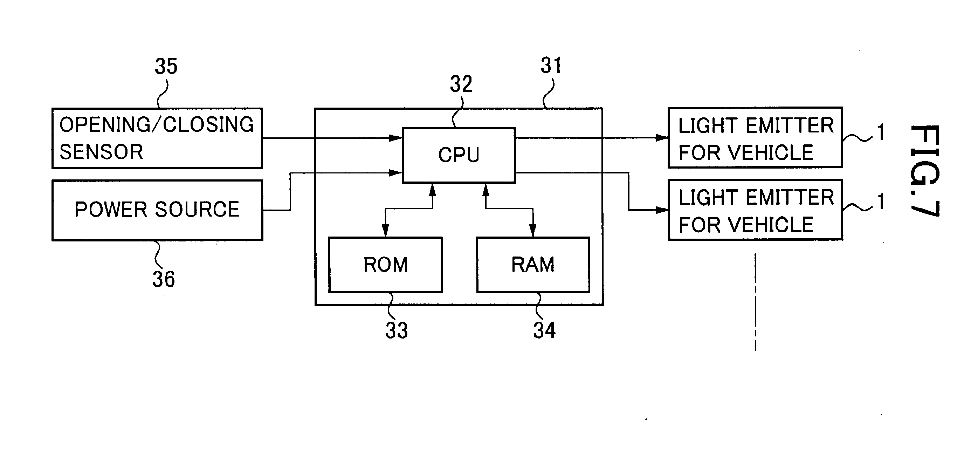

FIG. 7 is a block diagram showing the present embodiment. As shown, a controller 31 includes a CPU 32, a ROM 33, and a RAM 34. The ROM 33 is provided with a program for causing the CPU 32 to implement a control as shown in a flowchart which will be explained later, and the RAM 34 is used as a work area for the CPU 32.

The CPU 32 is connected to an opening/closing sensor 35, a power source 36, and the plurality of light emitters for vehicle 1. The opening/closing sensor 35 is a sensor (such as an opening/closing switch) for generating a signal upon a detection of an entire opening/closing of the sliding door 24. The power source 36 causes the LEDs 8 of the light emitter for vehicle 1 to emit a light, and may be an onboard battery which is loaded on the vehicle 20, a solar battery which is provided separately from the onboard battery, or a special battery for the light emitter for vehicle 1.

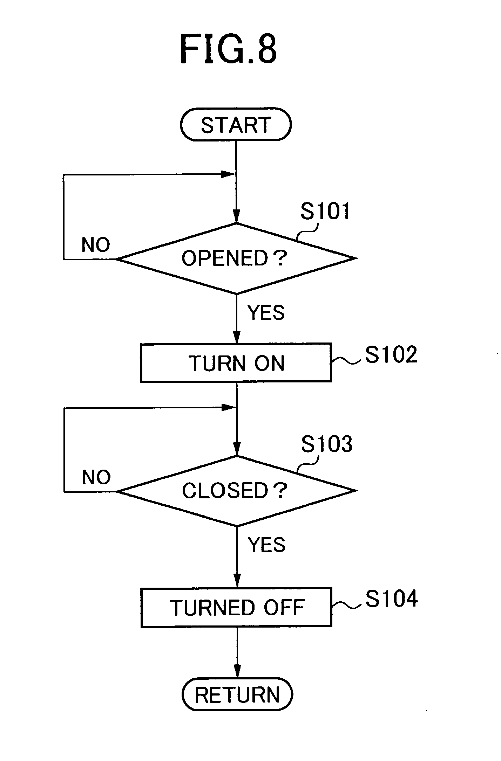

In the present embodiment having the configuration as described above, the CPU 32 implements the processes according to the program as shown in the flowchart of FIG. 8. That is, based on a signal issued by the opening/closing sensor 35, the CPU 32 determines if an opening operation of the sliding door 24 is detected or not (step S101), and, if not, waits for a detection of the opening operation.

When the sliding door 24 is manually moving in the opening direction thereof for unloading of a passenger, the determination at step S101 changes to YES. As a result, the process goes from step S101 to step S102, where the power source 36 is caused to supply electric power to the light emitter for vehicle 1 so that the LEDs 8 of the light emitter for vehicle 1 are turned on (step S102). In this way, when the sliding door 24 is opening, the LEDs 8 of the light emitter for vehicle 1 are turned on, which gives a warning to vehicles behind the vehicle 20 that a child is getting out of the vehicle for example.

Next, based on a signal issued from opening/closing sensor 35, the CPU determines if an entire closing of the sliding door 24 is detected or not (step S103), and, if not, keeps the LEDs turned on while waiting for a detection of the entire closing.

When the passenger completely gets out of the vehicle 20, or completely gets on the vehicle 20 and the sliding door 24 is manually operated to be in an entirely open state, the determination at step S103 changes to YES. As a result, the process goes from step S103 to step S104, where the power source 36 is caused to stop supplying electric power so that the LEDs 8 of the light emitter for vehicle 1 are turned off (step S104).

### (Third Embodiment)

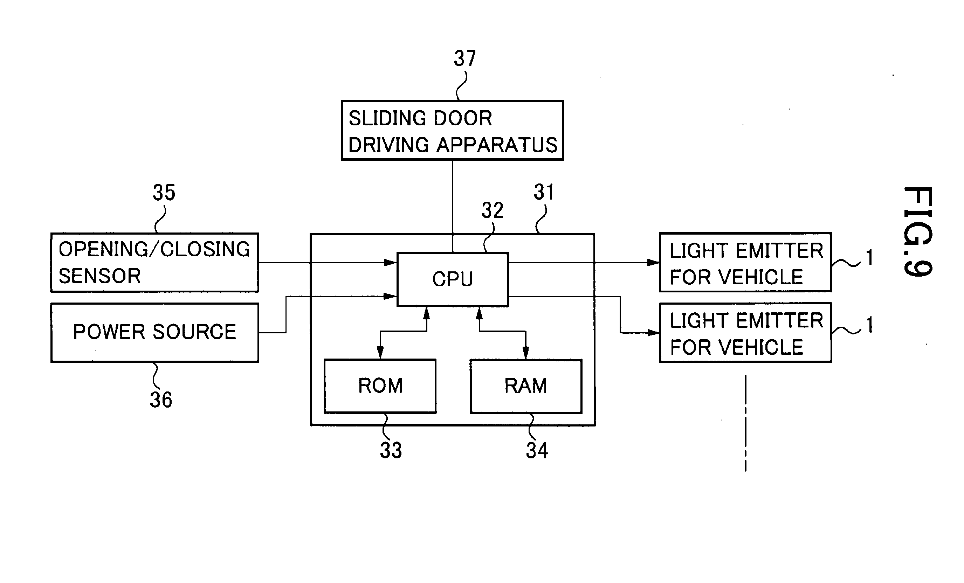

FIG. 9 is a block diagram showing the present embodiment. As shown, a controller 31 includes a CPU 32, a ROM 33, and a RAM 34. The ROM 33 is provided with a program for causing the CPU 32 to implement a control as shown in a flowchart which will be explained below, and the RAM 34 is used as a work area for the CPU 32.

The CPU 32 is connected to an opening/closing sensor 35, a power source 36, a sliding door driving apparatus 37, and the plurality of light emitters for vehicle 1. The opening/closing sensor 35 is a sensor (such as an opening/closing switch) for generating a signal upon a detection of an entire opening/closing of the sliding door 24. The power source 36 causes the LEDs 8 of the light emitter for vehicle 1 to emit a light, and may be an onboard battery which is loaded on the vehicle 20, a solar battery which is provided separately from the onboard battery, or a special battery for the light emitter for vehicle 1.

The sliding door driving apparatus 37 is configured as a motor, gear, or the like for driving the sliding door 24, and the plurality of light emitters for vehicle 1 are, as shown in FIG. 5 and FIG. 6, arranged on the rear surface 25 of the sliding door 24.

The CPU 32 has a timer incorporated therein.

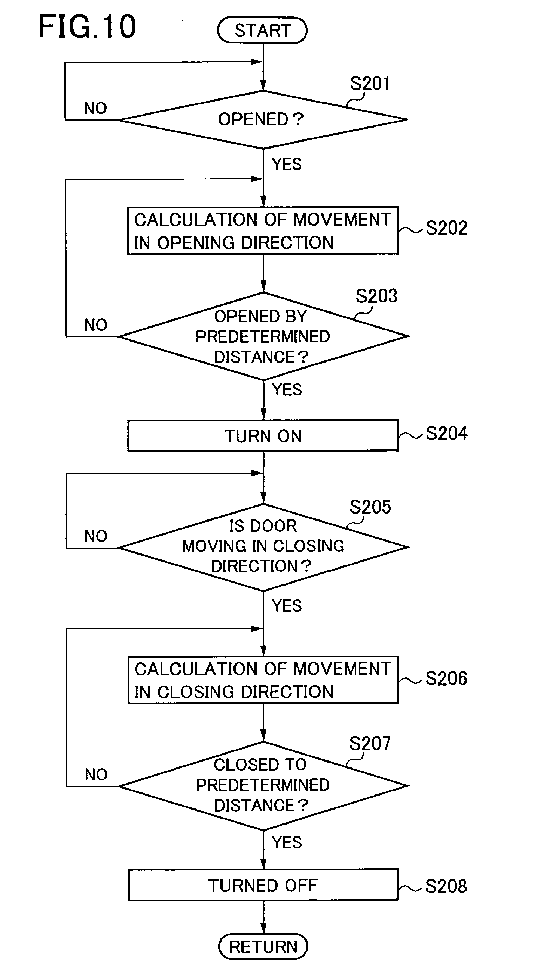

In the present embodiment having the configuration as described above, the CPU 32 implements the processes according to the program as shown in the flowchart of FIG. 10. That is, based on a signal issued by the opening/closing sensor 35, the CPU 32 determines if an opening operation of the sliding door 24 is detected or not (step S201), and, if not, waits for a detection of the opening operation.

When the sliding door driving apparatus 37 is operated by a switch to cause the sliding door 24 to be moved in the opening direction thereof for unloading of a passenger, the determination at step S201 changes to YES. As a result, the process goes from step S201 step S202, where the CPU 32 executes calculation of the movement in the opening direction of the sliding door 24 in the opening direction thereof based on the operation time of the sliding door driving apparatus 37 which is measured by the timer incorporated in the CPU 32 (step S202). Then, based on the calculated movement in the opening direction, the CPU 32 determines if the sliding door 24 is moved by a predetermined distance or not, that is if the sliding door 24 is open by a distance (for example 200 mm) between which a child can get out of the vehicle 20 or not (step S203).

When the sliding door 24 is open by a distance between which a child can get out of the vehicle 20 and the determination at step S203 changes to YES, the power source 36 is caused to supply electric power to the light emitter for vehicle 1 so that the LEDs 8 of the light emitter for vehicle 1 are turned on (step S204). In this way, when the sliding door 24 is open by a distance between which a child can get out of the vehicle 20, the LEDs 8 of the light emitter for vehicle 1 are turned on, which gives a warning to vehicles behind the vehicle 20 that a child is getting out of the vehicle 20.

Next, based on an operation of the sliding door driving apparatus 37, the CPU determines if the sliding door 24 begins to move in the closing direction thereof (step S205) or not, and, if not, keeps the LEDs turned on while waiting for a detection of a movement of the sliding door 24 in the closing direction thereof.

When the passenger completely gets out of the vehicle 20, or completely gets on the vehicle 20 and the sliding door driving apparatus 37 is operated by a switch to cause the sliding door 24 to be moved in the closing direction from its entirely opened position, the determination at step S205 changes to YES. As a result, the process goes from step S205 to step S206, where the CPU 32 executes calculation of the movement of the sliding door 24 in the closing direction thereof based on the operation time of the sliding door driving apparatus 37 which is measured by the timer incorporated in the CPU 32 (step S206). Then, based on the calculated movement in the closing direction, the CPU 32 determines if the sliding door 24 is closed to a predetermined distance or not, that is if the sliding door 24 is closed to a distance between which a child cannot get out of the vehicle 20 (for example, the sliding door 24 is open at a position 150 mm away from its closed position) or not (step S207).

When the sliding door 24 is closed to a distance between which a child cannot get out of the vehicle 20 and the determination at step S207 changes to YES, the power source 36 is caused to supply electric power to the light emitters for vehicle 1 so that the LEDs 8 of the light emitters for vehicle 1 are turned off (step S208) .

In the second embodiment, only the opening/closing sensor 35 is provided to generate a signal upon a detection of an entire opening/closing of the sliding door 24. However, an opening direction detection sensor for generating a signal when the sliding door 24 is moved in the opening direction by a predetermined distance (e.g., 200 mm), and a closing direction detection sensor for generating a signal when the sliding door 24 is moved in the closing direction to a predetermined distance (for example, the sliding door 24 is open at a position 150 mm away from the closed position) may be further provided.

The above configuration enables the control of the LEDs 8 of the light emitter for vehicle 1 even in the case where sliding door 24 is manually operated, similar to the third embodiment, so that when the sliding door 24 is opened by a distance between which a child can get out of the vehicle 20 and the determination at step S203 changes to YES, the power source 36 is caused to stop supplying electric power to the light emitters for vehicle 1 so that the LEDs 8 of the light emitters for vehicle 1 are turned on (step S204), and when the sliding door 24 is closed to a distance between which a child cannot get out of the vehicle 20 and the determination at step S207 changes to YES, the power source 36 is caused to stop supplying electric power to the light emitters for vehicle 1 so that the LEDs 8 of the light emitters for vehicle 1 are turned off (step S208).

Furthermore, in the third embodiment, the opening/closing sensor 35 is provided to detect an opening/closing of the sliding door 24, but an opening/closing of the sliding door 24 may be detected only based on an operation of the sliding door driving apparatus 37 without the opening/closing sensor 35.

## Claims

1. A light emitter for vehicle, comprising:
a base member having a plurality of light emitting diodes arranged on a surface thereof and an adhesive layer formed on the other surface thereof to be adhered to a surface of a vehicle.

2. The light emitter for vehicle according to claim 1, wherein
the base member is flexible.

3. The light emitter for vehicle according to claim 1 or 2, wherein
the light emitting diodes are arranged in line.

4. The light emitter for vehicle according to any one of claims 1 to 3, wherein
the base member has a recess formed in one surface thereof, and the recess has a bottom surface on which the plurality of light emitting diodes are arranged, and also the recess is filled with a transparent resin.

5. The light emitter for vehicle according to claim 4, wherein
the transparent resin is filled to a level flush with a surface of one side of the base member.

6. The light emitter for vehicle according to any one of claims 1 to 5, wherein
the adhesive layer has a release paper adhered to one surface thereof.

7. An apparatus for alerting opening/closing of a sliding door, comprising:
the light emitter for vehicle according to any one of claims 1 to 5 which is provided to at least one of a rear part of a vehicle having a sliding door and a rear surface of sliding door;
detecting means for detecting opening/closing of the sliding door; and
controlling means for turning on the light emitting diodes of the light emitter for vehicle in response to a detection of the sliding door opening by the detecting means, and for turning off the light emitting diodes of the light emitter for vehicle in response to a detection of the sliding door closing.

8. The apparatus for alerting opening/closing of a sliding door according to claim 7, wherein
the controlling means turns on the light emitting diodes of the light emitter for vehicle in response to a detection of the sliding door opening by a predetermined distance by the detecting means, and turns off the light emitting diodes of the light emitter for vehicle in response to a detection of the sliding door closing at a predetermined distance.

9. The apparatus for alerting opening/closing of a sliding door according to claim 7 or 8, wherein
the light emitters for vehicle are provided to a rear part of a vehicle body having a sliding door and to a rear surface of the sliding door.

10. The apparatus for alerting opening/closing of a sliding door according to any one of claims 7 to 9, wherein
the rear part of a vehicle body is a rear pillar.
